# EUROPEAN PATENT SPECIFICATION

(11) **EP 2 713 836 B1**
(45) Date of publication and mention of the grant of the patent: **30.09.2015**
(21) Application number: 12726223.6
(22) Date of filing: 16.05.2012
(51) Int. Cl.: A47J 31/053

(54) **APPARATUS AND METHOD FOR PREPARING A BEVERAGE FROM A SOLVENT AND INGREDIENTS**
VORRICHTUNG UND VERFAHREN ZUR HERSTELLUNG EINES GETRÄNKS AUS EINEM LÖSUNGSMITTEL UND ANDEREN BESTANDTEILEN
APPAREIL ET PROCÉDÉ POUR PRÉPARER UNE BOISSON À PARTIR D'UN SOLVANT ET D'INGRÉDIENTS

(30) Priority: 23.05.2011 WO PCT/CN2011/074525
(43) Date of publication of application: 09.04.2014
(73) Proprietor: Koninklijke Philips N.V., 5656 AE Eindhoven (NL)
(72) Inventor: HA, Wan Kei Ricky, 5656 AE Eindhoven (NL)
(74) Representative: Coops, Peter
(86) International application number: PCT/IB2012/052448
(87) International publication number: WO 2012/160482

(56) References cited:
- US-A- 2 975 723
- US-A- 4 464 983
- US-A- 5 868 062

## Description

### FIELD OF THE INVENTION

The invention relates to an apparatus and a method for preparing a beverage from a solvent and ingredients.

The invention may be used in the field of beverage preparation.

### BACKGROUND OF THE INVENTION

When a beverage is prepared from a solvent and ingredients, for example a tea beverage by brewing tea leaves in water, the prepared beverage is usually poured manually by a user into a recipient, such as a glass or a cup, before the beverage is consumed.

This traditional approach has some limitations in the sense that it often requires some manual user action to be performed on the apparatus used to prepare the beverage, such as removing an infuser in which ingredients have infused, or opening a lid that serves for closing off the apparatus during preparation of a beverage.

Patent document US 5 868 062 A describes a coffee making apparatus using heated and unheated water via the use of a circulation pump. Patent documents US 4 464 983 A and US 2 975 723 A describe percolator-type devices.

### SUMMARY OF THE INVENTION

It is an object of the invention to propose an improved apparatus and method for preparing a beverage from a solvent and ingredients. The invention is defined by the independent claims. The dependent claims define advantageous embodiments.

To this end, the apparatus according to the invention comprises:
- a container for containing said solvent,
- an infuser for containing said ingredients,
- a pumping system for carrying solvent from said container to said infuser,
wherein the infuser is arranged so as to assume:
- a first position allowing the solvent carried to the infuser by the pumping system to circulate inside the infuser containing said ingredients, and allowing said solvent circulating inside the infuser to be subsequently carried back into said container, and
- a second position allowing the solvent carried to the infuser by the pumping system to circulate outside the infuser containing said ingredients, and allowing said solvent circulating outside the infuser to be subsequently carried outside said container.

This apparatus allows preparing a beverage from a solvent and ingredients by brewing the ingredients in the solvent and, subsequently, dispensing the prepared beverage without any complex manual user action having to be performed on the apparatus used to prepare the beverage.

Detailed explanations and other aspects of the invention will be given below.

### BRIEF DESCRIPTION OF THE DRAWINGS

The particular aspects of the invention will now be explained with reference to the embodiments described hereinafter and considered in connection with the accompanying drawings, in which identical parts or sub-steps are designated in the same manner:
Fig.1 depicts schematically an apparatus according to the invention,
Fig.2 depicts a cross-sectional view of an apparatus according to the invention during the dispensing of the beverage,
Fig.3 depicts a cross-sectional view of an apparatus according to the invention during the brewing of the ingredients,
Fig.4 depicts an infuser according to the invention comprising a drainage assembly and a bypass channel,
Fig.5 depicts an infuser according to the invention comprising a drainage assembly and a bypass channel,
Fig.6 depicts a cross-sectional view of an apparatus according to the invention during the brewing of the ingredients,
Fig.7 depicts an infuser according to the invention comprising a drainage assembly and a bypass channel,
Fig.8 depicts an infuser according to the invention comprising a drainage assembly and a bypass channel,
Fig.9 depicts a cross-sectional view of an apparatus according to the invention during the brewing of the ingredients,
Fig.10 depicts an infuser according to the invention comprising a drainage assembly and a bypass channel,
Fig.11 depicts an infuser according to the invention comprising a drainage assembly and a bypass channel,
Fig.12 depicts a cross-sectional view of an apparatus according to the invention during the brewing of the ingredients,
Fig.13 depicts an infuser according to the invention comprising a drainage assembly and a bypass channel,
Fig.14 depicts a cross-sectional view of an apparatus according to the invention during the dispensing of the beverage,
Fig.15 depicts a cross-sectional view of an apparatus according to the invention during the dispensing of the beverage,
Fig.16 depicts a cross-sectional view of an apparatus according to the invention during the dispensing of the beverage.

### DETAILED DESCRIPTION OF PREFERRED EMBODIMENTS

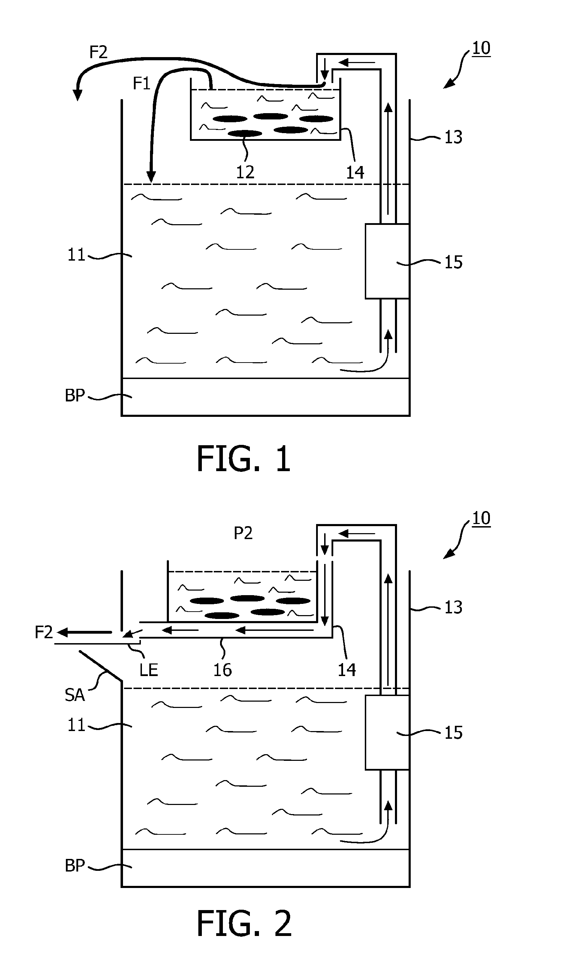

Fig.1 depicts an apparatus 10 for preparing a beverage from a solvent 11 and ingredients 12 according to an embodiment of the invention. The apparatus 10 comprises:
- a container 13 for containing said solvent,
- an infuser 14 for containing said ingredients,
- a pumping system 15 for carrying solvent from said container to said infuser,
wherein the infuser 14 is arranged so as to assume:
- a first position P1 allowing the solvent carried to the infuser by the pumping system to circulate inside the infuser containing said ingredients, and allowing said solvent circulating inside the infuser to be subsequently carried back into said container, and
- a second position P2 allowing the solvent carried to the infuser by the pumping system to circulate outside the infuser containing said ingredients, and allowing said solvent circulating outside the infuser to be subsequently carried outside said container.

The solvent is preferably chosen, without limitation, from the following solvents, or mix of the following solvents: water, mineral water, tap water, salted water, alcohol.

The ingredients may be selected, without limitation, from at least one of the following ingredients: tea leaves, plant leaves, coffee grind, herbs, plant roots, fruits, dry fruits.

When the infuser is in the first position P1, the solvent carried to the infuser is carried back into the container, as schematically illustrated by arrow F1. In this first position, the solvent first enters the infuser where ingredients are placed. Then, the solvent leaves the infuser and is carried back into the container. This closed circulation of the solvent from the container to the infuser allows brewing the ingredients. This closed circulation is continued until the solvent in the container has reached a desired level of infusion of ingredients in the solvent, which can be visually assessed by a user, or by making the pumping system run during a preset period of time.

When the infuser is in the second position P2, the solvent carried to the infuser is directly carried outside the container, as schematically illustrated by arrow F2. In this second position, the solvent no longer circulates inside the infuser where the ingredients are placed, thereby avoiding possible over-infusion of the ingredients that could affect the taste of the resulting beverage.

Advantageously, the infuser 14 is preferably placed at an upper part of the container, above the solvent.

Optionally, the container comprises a bottom part BP that is used to strengthen the structure of the container, or to accommodate a heating element (not shown). The heating element is intended to heat the solvent. For example, the heating element may correspond to a resistor (not illustrated) connected to an electrical source. The heating element is intended to heat the solvent in the container, so that heated solvent is carried to the infuser, which may accelerate the brewing of the ingredients.

In a preferred embodiment, as depicted in Fig.2, the infuser comprises a bypass channel 16 allowing the solvent carried to the infuser by the pumping system to circulate outside the infuser containing said ingredients, and allowing said solvent circulating outside the infuser to be subsequently carried outside said container. Advantageously, the bypass channel is formed by a conduit placed along walls of the infuser. Part of the conduit is for example placed inside and along a vertical wall of the infuser, and part of the conduit is placed along an outside, horizontal wall (i.e. bottom) of the infuser.

Preferably, the container comprises a spout assembly SA. The spout assembly SA is intended to be used when a user wants to manually pour the beverage from the container into, for example, a glass or cup. According to the invention, the position of the bypass channel matches with that of the spout assembly to allow the solvent circulating outside the infuser to be carried outside said container. To this end, the output of the bypass channel is in a higher position than a linking element LE corresponding to the top part of the spout assembly SA, at the top of which the container comprises an opening allowing the solvent to communicate with the exterior of the container.

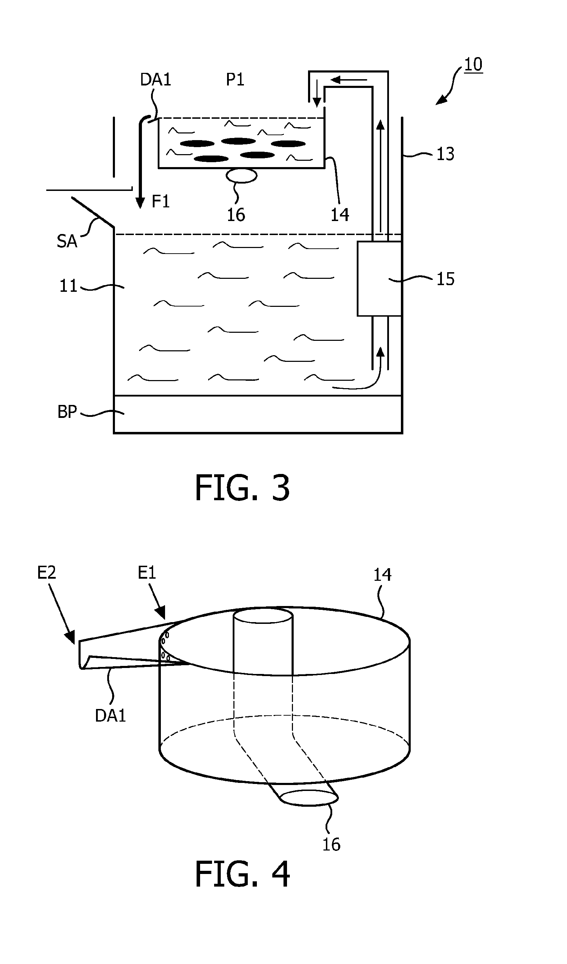

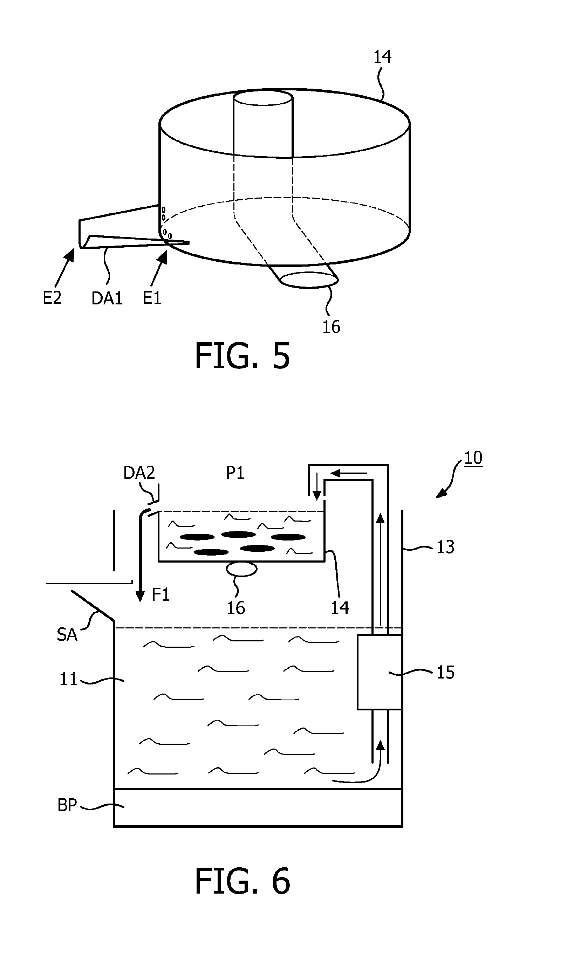

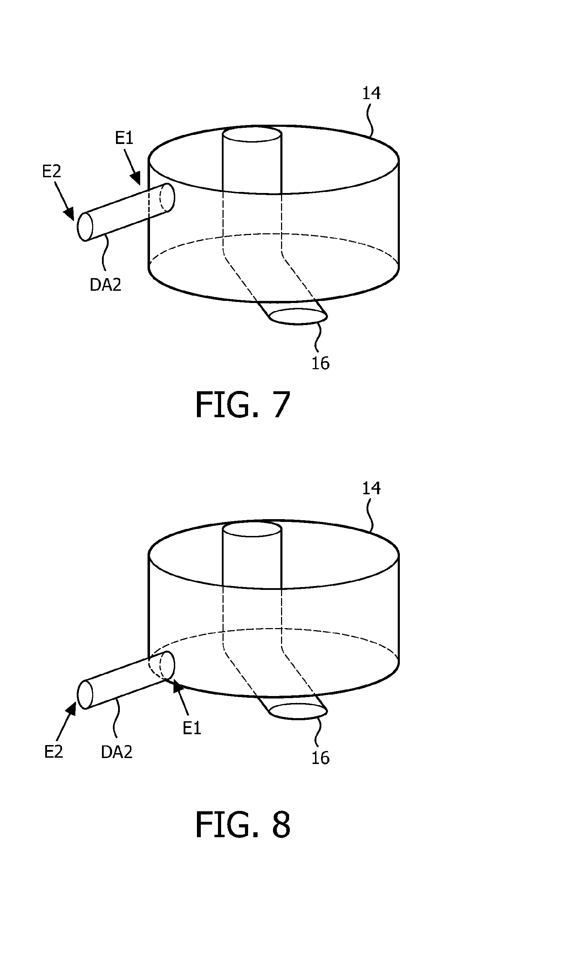

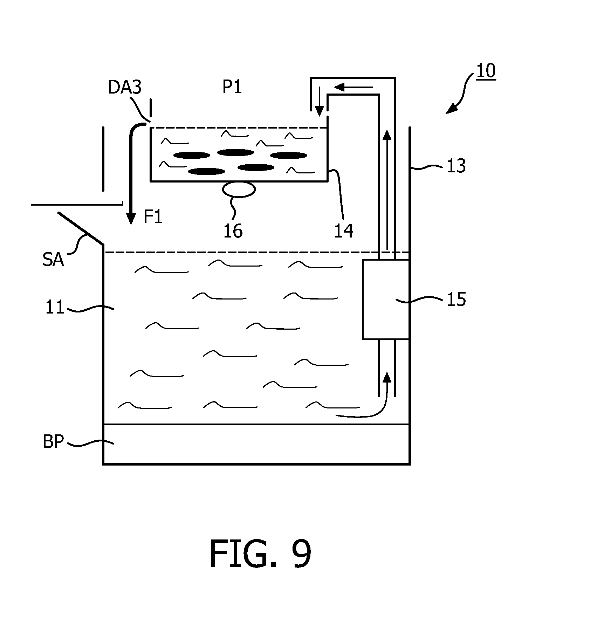

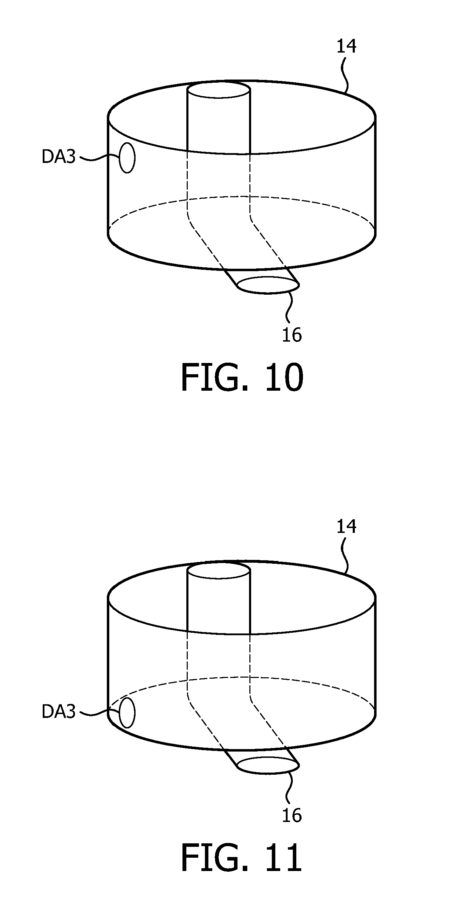

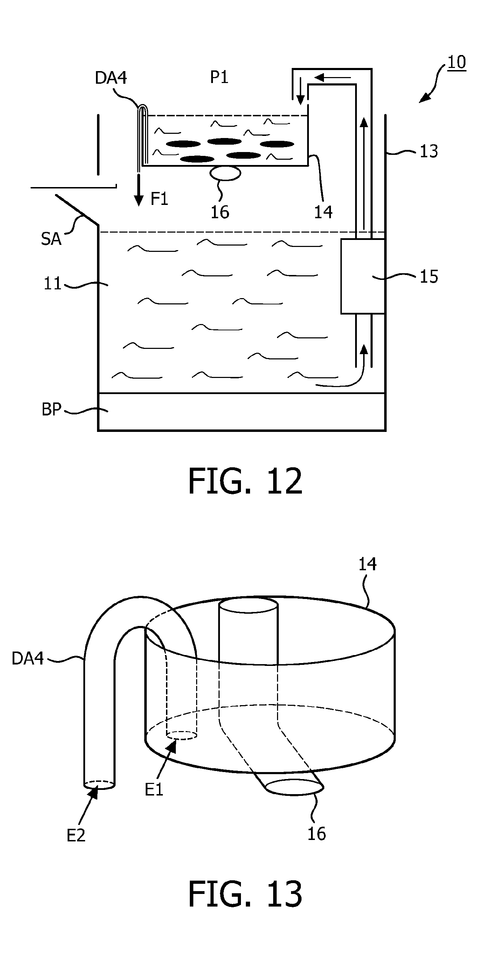

Advantageously, the infuser comprises a drainage assembly mounted on the infuser to allow the solvent in the infuser to be carried back into said container. The drainage assembly may correspond to:
- an open conduit structure DA1 provided at an upper part of the infuser, as depicted in Fig.4; as illustrated in Fig.3, when the solvent in the infuser rises to the level of the open conduit, the solvent overflows into the open conduit and drops back into the container,
- an open conduit structure DA1 placed at a lower part of the infuser, as depicted in Fig.5,
- a pipe assembly DA2 placed at an upper part of the infuser, as depicted in Fig.7; as illustrated in Fig.6, when the level of the solvent in the infuser reaches the level of the pipe assembly, the solvent overflows into the pipe assembly and drops back into the container,
- a pipe assembly DA2 placed at a lower part of the infuser, as depicted in Fig.8,
- a hole DA3 in the wall of said infuser, formed at an upper part of the infuser, as depicted in Fig.10; as illustrated in Fig.9, when the level of the solvent in the infuser reaches the level of the hole, the solvent overflows into the hole and drops back into the container,
- a hole DA3 in the wall of said infuser, formed at a lower part of the infuser, as depicted in Fig.11,
- a siphon assembly DA4, as depicted in Fig.13; as illustrated in Fig.12, when the level of the solvent in the infuser reaches the highest point of the siphon, the solvent enters the siphon and drops back into the container.

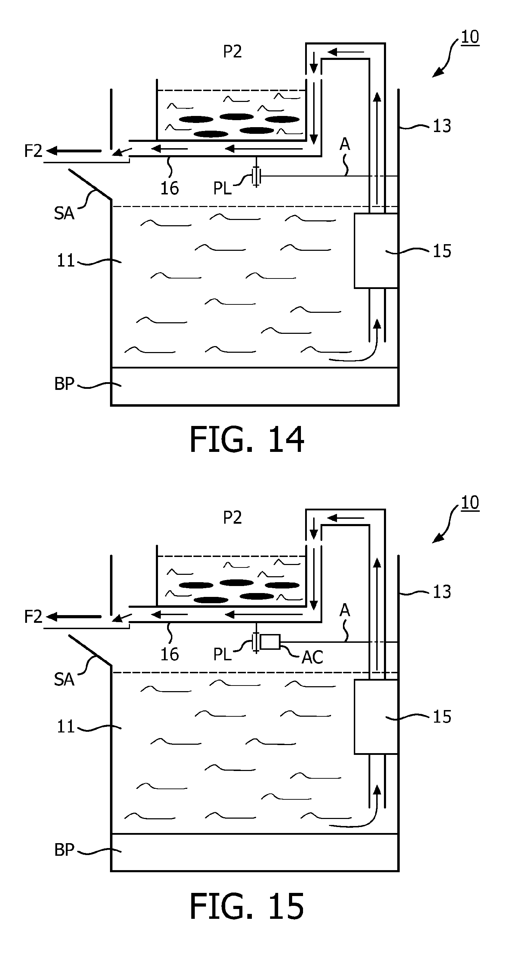

Advantageously, as depicted in the apparatus of Fig. 14, the infuser is arranged to rotate from the first position P1 to the second position P2 and from the second position P2 to the first position P1. To this end, the infuser is mounted on a pivot link PL connected to the wall(s) (?) of the container via an arm A. If the center of the infuser is taken as reference, the rotation angle corresponds to the angle between the output of the drainage assembly and the output of the bypass channel, for example 90 degrees as illustrated in Figs.4-5-7-8-10-11-13. Advantageously, as depicted in Fig.15, this apparatus further comprises an actuator AC for rotating the infuser. The actuator AC can for example correspond to an electrical motor activated by a switch (not shown) operated by the user. Alternatively, the actuator can be triggered by a control unit in the apparatus after a preset period of time without any user action, so that the beverage is automatically dispensed (into a glass or cup placed outside the container) when ready.

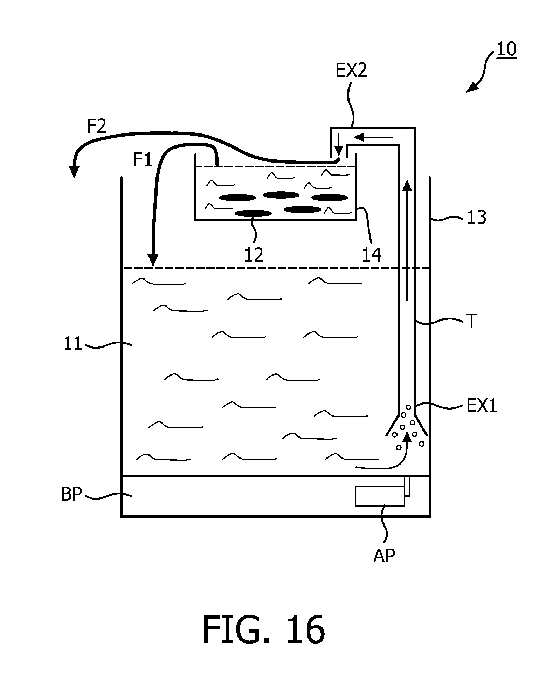

In the various apparatus according to the invention described above, the pumping system 15 is a fluid pump for pumping solvent from said container to said infuser. Alternatively, as depicted in Fig.16, the pumping system 15 comprises:
- a tube T placed in the container, said tube having a first extremity EX1 situated in the proximity of a bottom part BP of the container, and a second extremity EX2 reaching the infuser 14, and
- an air pump AP for generating an air flow exiting at said bottom part and entering the tube at said first extremity, for carrying said solvent in said tube from said first extremity to said second extremity.

The air flow is illustrated by white circles in solvent, under the first extremity. The air pump may be of any type, but is preferably a diaphragm air pump. Air is pumped from outside of the container. It is appreciated that the tube T preferably extends vertically so as to facilitate the movement of the air flow and the solvent therein. However, the tube may also be such that its main axis departs from the vertical direction, for example by an angle between 0 and 45 degrees. Also, the tube T is preferably cylindrical-shaped, but may also have different shapes, such as a corkscrew shape or a curved shape. The tube T advantageously has an average diameter between 5 and 7 millimeters, or an average sectional area between 19.6 and 38.5 square millimeters. Advantageously, as illustrated, the first extremity of tube T has a funnel-shaped entrance, so that an air flow generated by the air pump can more easily enter the tube. The air pump advantageously generates an air flow of between 1 and 2 liters per minute, and the pumping is efficient if at least 80 % of this air flow enters the tube at the first extremity. By generating an air flow by means of the air pump instead of vapor bubbles naturally generated by locally boiling water, as is the case with a standard percolator, the solvent can reach the upper part of the tube while having a temperature much below the boiling temperature of the solvent, enabling the temperature to be adapted to the ingredients used. Preferably, if a heating element is used in the bottom part of the container, the heating power of the heating element is such that the solvent is heated to a temperature in excess of 60 degrees Centigrade, so as to improve the pumping effect in the tube T.

The invention also relates to a method of preparing a beverage from a solvent and ingredients, using a container containing the solvent and an infuser containing the ingredients. The method comprises various steps conducted by the various apparatus according to the invention described above. The method comprises the steps of:
- carrying solvent from said container to said infuser,
- circulating the solvent inside the infuser containing said ingredients, after the solvent has been carried to the infuser by the pumping system, and allowing the the solvent circulating inside the infuser to be subsequently carried back into said container,
- circulating the solvent outside the infuser containing said ingredients, after the solvent has been carried to the infuser by the pumping system, and allowing the solvent circulating outside the infuser to be subsequently carried outside said container.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single unit may fulfill the functions of several items recited in the claims. The mere fact that certain measures are recited in mutually different dependent claims does not indicate that a combination of these measures cannot be used to advantage. Any reference signs in the claims should not be construed as limiting the scope.

## Claims

1. An apparatus (10) for preparing a beverage from a solvent (11) and ingredients (12), said apparatus comprising:
- a container (13) for containing said solvent,
- an infuser (14) for containing said ingredients,
- a pumping system (15) for carrying solvent from said container to said infuser,
**characterized in that** the infuser (14) is arranged so as to assume:
- a first position (P1) allowing the solvent carried to the infuser by the pumping system to circulate inside the infuser containing said ingredients, and allowing said solvent circulating inside the infuser to be carried back into said container, and
- a second position (P2) allowing the solvent carried to the infuser by the pumping system to circulate outside the infuser containing said ingredients, and allowing said solvent circulating outside the infuser to be carried outside said container.

2. Apparatus as claimed in claim 1, wherein the infuser comprises a bypass channel (16) allowing the solvent carried to the infuser by the pumping system to circulate outside the infuser containing said ingredients, and allowing said solvent circulating outside the infuser to be carried outside said container.

3. Apparatus as claimed in claim 2, wherein said infuser comprises walls, and wherein said bypass channel is formed by a conduit placed along said walls.

4. Apparatus as claimed in claim 2, wherein said container comprises a spout assembly (SA), and wherein the position of said bypass channel matches with that of said spout assembly, allows said solvent circulating outside the infuser to be carried outside said container.

5. Apparatus as claimed in claim 1, 2, 3 or 4, wherein the infuser comprises a drainage assembly mounted on said infuser to allow the solvent in the infuser to be carried back into said container.

6. Apparatus as claimed in claim 5, wherein said drainage assembly comprises an open conduit structure (DA1).

7. Apparatus as claimed in claim 5, wherein said drainage assembly comprises a pipe assembly (DA2).

8. Apparatus as claimed in claim 5, wherein said drainage assembly is in the form of a hole (DA3) in the wall of said infuser.

9. Apparatus as claimed in claim 5, wherein said drainage assembly comprises a siphon assembly (DA4).

10. Apparatus as claimed in claim 1, 2, 3 or 4, wherein said infuser is adapted to rotate from said first position (P1) to said second position (P2), and to rotate from said second position (P2) to said first position (P1).

11. Apparatus as claimed in claim 10, further comprising an actuator (AC) for rotating said infuser.

12. Apparatus as claimed in claim 1, 2, 3 or 4, wherein said pumping system (15) is a fluid pump.

13. Apparatus as claimed in claim 1, 2, 3 or 4, wherein said pumping system (15) comprises:
- a tube (T) placed in the container, said tube having a first extremity (EX1) situated in the proximity of a bottom part (BP) of the container, and a second extremity (EX2) reaching the infuser 14, and
- an air pump (AP) for generating an air flow exiting at said bottom part and entering the tube at said first extremity, for carrying said solvent in said tube from said first extremity to said second extremity.

14. A method of preparing a beverage from a solvent and ingredients, using a container containing the solvent and an infuser containing the ingredients, said method comprising the steps of:
- carrying solvent from said container to said infuser,
- positioning the infuser in a first position (P1) allowing the solvent carried to the infuser by the pumping system to circulate inside the infuser containing said ingredients, and allowing said solvent circulating inside the infuser to be carried back into said container, and
- positioning the infuser in a second position (P2) allowing the solvent carried to the infuser by the pumping system to circulate outside the infuser containing said ingredients, and allowing said solvent circulating outside the infuser to be carried outside said container.

## Patentansprüche

1. Gerät (10) zum Zubereiten eines Getränkes aus einem Lösungsmittel (11) und Zutaten (12), wobei das besagte Gerät folgendes umfasst:
- einen Behälter (13) zur Aufnahme des besagten Lösungsmittels,
- eine Brüheinheit (14) zur Aufnahme der besagten Zutaten,
- ein Pumpsystem (15) zum Befördern des Lösungsmittels aus dem besagten Behälter in die besagte Brüheinheit,
**dadurch gekennzeichnet, dass** die Brüheinheit (14) gestaltet ist, um folgendes einzunehmen:
- eine erste Position (P1), die es dem Lösungsmittel, das vom Pumpsystem zur Brüheinheit befördert wird, ermöglicht, innerhalb der Brüheinheit, die die besagten Zutaten beinhaltet, zu zirkulieren, und die es dem Lösungsmittel ermöglicht, innerhalb der Brüheinheit zu zirkulieren, um zurück in den besagten Behälter befördert zu werden, und
- eine zweite Position (P2), die es dem Lösungsmittel, das vom Pumpsystem zur Brüheinheit befördert wird, ermöglicht, außerhalb der Brüheinheit, die die besagten Zutaten beinhaltet, zu zirkulieren, und die es dem Lösungsmittel, das außerhalb der Brüheinheit zirkuliert, ermöglicht, aus dem besagten Behälter befördert zu werden.

2. Gerät nach Anspruch 1, wobei die besagte Brüheinheit einen Umgehungskanal (16) umfasst, der es dem Lösungsmittel, das vom Pumpsystem zur Brüheinheit befördert wird, ermöglicht, außerhalb der Brüheinheit, die die besagten Zutaten beinhaltet, zu zirkulieren, und die es dem Lösungsmittel, das außerhalb der Brüheinheit zirkuliert, ermöglicht, aus dem besagten Behälter befördert zu werden.

3. Gerät nach Anspruch 2, wobei die besagte Brüheinheit Wände umfasst, und wobei der besagte Umgehungskanal durch eine Rohrleitung gebildet wird, die entlang der besagten Wände angeordnet ist.

4. Gerät nach Anspruch 2, wobei der besagte Behälter eine Ausgussbaugruppe (SA) umfasst, und wobei die Position des besagten Umgehungskanals mit jener der besagten Ausgussbaugruppe übereinstimmt, wodurch es dem Lösungsmittel möglich ist, außerhalb der Brüheinheit zu zirkulieren, um aus dem besagten Behälter befördert zu werden.

5. Gerät nach Anspruch 1, 2, 3 oder 4, wobei die Brüheinheit eine Drainagebaugruppe umfasst, die auf der besagten Brüheinheit montiert ist, um es dem Lösungsmittel in der Brüheinheit zu ermöglichen, zurück in den besagten Behälter befördert zu werden.

6. Gerät nach Anspruch 5, wobei die besagte Drainagebaugruppe eine offene Kanalstruktur (DA1) umfasst.

7. Gerät nach Anspruch 5, wobei die besagte Drainagebaugruppe eine Rohrbaugruppe (DA2) umfasst.

8. Gerät nach Anspruch 5, wobei die besagte Drainagebaugruppe die Form eines Lochs (DA3) in der Wand der besagten Brüheinheit aufweist.

9. Gerät nach Anspruch 5, wobei die besagte Drainagebaugruppe eine Siphonbaugruppe (DA4) umfasst.

10. Gerät nach Anspruch 1, 2, 3 oder 4, wobei sich die besagte Brüheinheit dazu eignet, sich von der besagten ersten Position (P1) in die besagte zweite Position (P2) zu drehen, und sich von der besagten zweiten Position (P2) in die besagte erste Position (P1) zu drehen.

11. Gerät nach Anspruch 10, das darüber hinaus ein Stellglied (AC) zum Drehen der besagten Brüheinheit umfasst.

12. Gerät nach Anspruch 1, 2, 3 oder 4, wobei das besagte Pumpsystem (15) eine Flüssigkeitspumpe ist.

13. Gerät nach Anspruch 1, 2, 3 oder 4, wobei das besagte Pumpsystem (15) folgendes umfasst:
- ein Rohr (T), das im Behälter platziert ist, wobei das besagte Rohr ein erstes Ende (EX1) aufweist, das sich in der Nähe eines Unterteils (BP) des Behälters befindet, und ein zweites Ende (EX2), das bis zur Brüheinheit (14) reicht, und
- eine Luftpumpe (AP) zum Erzeugen einer Luftströmung, die im besagten Unterteil entsteht und am besagten ersten Ende in das Rohr eindringt, um das besagte Lösungsmittel im besagten Rohr vom besagten ersten Ende zum besagten zweiten Ende zu befördern.

14. Verfahren zum Zubereiten eines Getränkes aus einem Lösungsmittel und Zutaten, unter Verwendung eines Behälters, der das Lösungsmittel enthält, und einer Brüheinheit, die die Zutaten enthält, wobei das besagte Verfahren die folgenden Schritte umfasst:
- das Befördern des Lösungsmittels vom besagten Behälter in die besagte Brüheinheit,
- das Positionieren der Brüheinheit in eine erste Position (P1), die es dem Lösungsmittel, das vom Pumpsystem zur Brüheinheit befördert wird, ermöglicht, innerhalb der Brüheinheit, die die besagten Zutaten beinhaltet, zu zirkulieren, und die es dem Lösungsmittel ermöglicht, innerhalb der Brüheinheit zu zirkulieren, um zurück in den besagten Behälter befördert zu werden, und
- das Positionieren der Brüheinheit in eine zweite Position (P2), die es dem Lösungsmittel, das vom Pumpsystem zur Brüheinheit befördert wird, ermöglicht, außerhalb der Brüheinheit, die die besagten Zutaten beinhaltet, zu zirkulieren, und die es dem Lösungsmittel, das außerhalb der Brüheinheit zirkuliert, ermöglicht, aus dem besagten Behälter befördert zu werden.

## Revendications

1. Appareil (10) de préparation d'une boisson à partir d'un solvant (11) et d'ingrédients (12), ledit appareil comprenant :
- un récipient (13) permettant de contenir ledit solvant,
- un infuseur (14) permettant de contenir lesdits ingrédients,
- un système de pompage (15) permettant d'amener le solvant dudit récipient audit infuseur,
**caractérisé en ce que** l'infuseur (14) est agencé de sorte à adopter :
- une première position (P1) permettant au solvant amené à l'infuseur par le système de pompage de circuler à l'intérieur de l'infuseur contenant lesdits ingrédients et permettant audit solvant circulant à l'intérieur de l'infuseur d'être ramené dans ledit récipient, et
- une deuxième position (P2) permettant au solvant amené à l'infuseur par le système de pompage de circuler à l'extérieur de l'infuseur contenant lesdits ingrédients et permettant audit solvant circulant à l'extérieur de l'infuseur d'être amené à l'extérieur dudit récipient.

2. Appareil selon la revendication 1, dans lequel l'infuseur comprend un canal de dérivation (16) permettant au solvant amené à l'infuseur par le système de pompage de circuler à l'extérieur de l'infuseur contenant lesdits ingrédients et permettant audit solvant circulant à l'extérieur de l'infuseur d'être amené à l'extérieur dudit récipient.

3. Appareil selon la revendication 2, dans lequel ledit infuseur comprend des parois et dans lequel ledit canal de dérivation est formé d'un conduit placé le long desdites parois.

4. Appareil selon la revendication 2, dans lequel ledit récipient comprend un ensemble bec verseur (SA) et dans lequel la position dudit canal de dérivation correspond à celle dudit ensemble bec verseur, permettant audit solvant circulant à l'extérieur de l'infuseur d'être amené à l'extérieur dudit récipient.

5. Appareil selon la revendication 1, 2, 3 ou 4, dans lequel l'infuseur comprend un ensemble de drainage monté sur ledit infuseur permettant au solvant dans l'infuseur d'être ramené dans ledit récipient.

6. Appareil selon la revendication 5, dans lequel ledit ensemble de drainage comprend une structure de conduit ouvert (DA1).

7. Appareil selon la revendication 5, dans lequel ledit ensemble de drainage comprend un ensemble tuyau (DA2).

8. Appareil selon la revendication 5, dans lequel ledit ensemble de drainage est sous forme de trou (DA3) dans la paroi dudit infuseur.

9. Appareil selon la revendication 5, dans lequel ledit ensemble de drainage comprend un ensemble siphon (DA4).

10. Appareil selon la revendication 1, 2, 3 ou 4, dans lequel ledit infuseur est adapté pour tourner de ladite première position (P1) à ladite deuxième position (P2) et pour tourner de ladite deuxième position (P2) à ladite première position (P1).

11. Appareil selon la revendication 10, comprenant en outre un actionneur (AC) permettant de faire tourner ledit infuseur.

12. Appareil selon la revendication 1, 2, 3 ou 4, dans lequel ledit système de pompage (15) est une pompe à fluide.

13. Appareil selon la revendication 1, 2, 3 ou 4, dans lequel ledit système de pompage (15) comprend :
- un tube (T) placé dans le récipient, ledit tube ayant une première extrémité (EX1) située à proximité d'une partie inférieure (BP) du récipient et une deuxième extrémité (EX2) atteignant l'infuseur (14), et
- une pompe à air (AP) permettant de générer un flux d'air sortant au niveau de ladite partie inférieure et entrant dans le tube au niveau de ladite première extrémité, permettant d'amener ledit solvant dans ledit tube de ladite première extrémité à ladite deuxième extrémité.

14. Procédé de préparation d'une boisson à partir d'un solvant et d'ingrédients, utilisant un récipient contenant le solvant et un infuseur contenant les ingrédients, ledit procédé comprenant les étapes de :
- transport du solvant dudit récipient audit infuseur,
- positionnement de l'infuseur dans une première position (P1) permettant au solvant amené à l'infuseur par le système de pompage de circuler à l'intérieur de l'infuseur contenant lesdits ingrédients et permettant audit solvant circulant à l'intérieur de l'infuseur d'être ramené dans ledit récipient, et
- positionnement de l'infuseur dans une deuxième position (P2) permettant au solvant amené à l'infuseur par le système de pompage de circuler à l'extérieur de l'infuseur contenant lesdits ingrédients et permettant audit solvant circulant à l'extérieur de l'infuseur d'être amené à l'extérieur dudit récipient.
